# EUROPEAN PATENT APPLICATION

(11) **EP 3 435 296 A1**
(43) Date of publication of application: **30.01.2019**
(21) Application number: 17769585.5
(22) Date of filing: 06.01.2017
(51) Int. Cl.: G06N 99/00, G06N 3/08

(54) **INFORMATION PROCESSING DEVICE**

(30) Priority: 25.03.2016 JP 2016062770
(71) Applicant: Sony Corporation, Tokyo 108-0075 (JP)
(72) Inventor: FUKUI, Akira, Tokyo 108-0075 (JP)
(74) Representative: MFG Patentanwälte Meyer-Wildhagen Meggle-Freund Gerhard PartG mbB
(86) International application number: PCT/JP2017/000346
(87) International publication number: WO 2017/163538

(57) **Abstract**

[Object] To efficiently realize control learning in accordance with an environment in the real world.

[Solution] There is provided an information processing apparatus including: a generating unit configured to generate response information relating to a control target in an environmental model generated on a basis of an environmental parameter; and a transmitting unit configured to transmit the response information and the environmental parameter to a learning unit which performs machine learning relating to control of the control target. In addition, there is provided an information processing apparatus including: a communication unit configured to receive response information relating to a control target in an environmental model generated on a basis of a first environmental parameter, and the first environmental parameter; and a learning unit configured to perform machine learning relating to control of the control target using the received response information and the received first environmental parameter.

## Description

### Technical Field

The present disclosure relates to an information processing apparatus.

### Background Art

In recent years, a neural network which imitates a mechanism of a cranial nervous system has attracted attention. Further, some reports have been made that a neural network is caused to perform control learning by utilizing a physical simulator. For example, Non-Patent Literature 1 discloses a control learning result of a game using a simulator.

### Citation List

### Non-Patent Literature

Non-Patent Literature 1: DeepMind Technologies, and seven others, "Playing Atari with Deep Reinforcement Learning", November 9, 2015, [Online], [Retrieved on February 8, 2016], the Internet < https://www.cs.toronto.edu/∼vmnih/docs/dqn.pdf >

### Disclosure of Invention

### Technical Problem

However, with the method disclosed in Non-Patent Literature 1, it is difficult to cause a neural network to perform control learning which matches the real world.

Therefore, the present disclosure proposes an information processing apparatus which can efficiently realize control learning in accordance with an environment in the real world.

### Solution to Problem

According to the present disclosure, there is provided an information processing apparatus including: a generating unit configured to generate response information relating to a control target in an environmental model generated on a basis of an environmental parameter; and a transmitting unit configured to transmit the response information and the environmental parameter to a learning unit which performs machine learning relating to control of the control target.

In addition, according to the present disclosure, there is provided an information processing apparatus including: a communication unit configured to receive response information relating to a control target in an environmental model generated on a basis of a first environmental parameter, and the first environmental parameter; and a learning unit configured to perform machine learning relating to control of the control target using the received response information and the received first environmental parameter.

In addition, according to the present disclosure, there is provided an information processing apparatus including: an environment acquiring unit configured to acquire an environmental parameter relating to an environment state; a determining unit configured to determine whether or not the environment state has been learned on a basis of the acquired environmental parameter; and a transmitting unit configured to transmit the environmental parameter on a basis that the determining unit determines that the environment state has not been learned.

There is provided an information processing apparatus including: a receiving unit configured to receive an environmental parameter relating to an unlearned environment state; and a generating unit configured to generate data relating to behavior of a first control target in an environmental model generated on a basis of the environmental parameter.

### Advantageous Effects of Invention

As described above, according to the present disclosure, it is possible to efficiently realize control learning in accordance with an environment in the real world. Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating outline of an environmental model according to the present disclosure.
FIG. 2 is a conceptual diagram according to the present disclosure.
FIG. 3 is a system configuration example according to an embodiment.
FIG. 4 is a functional block diagram of each component according to the embodiment.
FIG. 5 is a conceptual diagram illustrating input and output of control learning according to the embodiment.
FIG. 6 is an example of an API used for passing environmental parameters according to the embodiment.
FIG. 7 is a conceptual diagram schematically illustrating a network structure of a control learning apparatus according to the embodiment.
FIG. 8 is a flowchart illustrating flow of learning according to the embodiment.
FIG. 9 is a flowchart illustrating flow of environment request according to the embodiment.
FIG. 10 is an example illustrating input/output data in an episode according to the embodiment in chronological order.
FIG. 11 is a conceptual diagram illustrating input and output of inverse reinforcement learning according to the embodiment.
FIG. 12 is a conceptual diagram illustrating input and output of environment capturing according to the embodiment.
FIG. 13 is a flowchart illustrating flow of environment determination according to the embodiment.
FIG. 14 is a display example of a notification screen according to the embodiment.
FIG. 15 is a flowchart illustrating flow of environment capturing according to the embodiment.
FIG. 16 is a hardware configuration example according to the present disclosure.

### Mode(s) for Carrying Out the Invention

Hereinafter, a preferred embodiment of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be provided in the following order.
1. Background according to present disclosure
1.1. Neural network
1.2. Operation control utilizing neural network
1.3. Control learning utilizing physical simulator
1.4. Outline according to present disclosure
2. Embodiment
2.1. System configuration example according to present embodiment
2.2. Environment generating apparatus 10
2.3. Control learning apparatus 20
2.4. Information processing apparatus 30
2.5. Environmental parameters according to present embodiment
2.6. Reward parameters according to present embodiment
2.7. Input/output relating to control learning of present embodiment
2.8. Flow of control learning according to present embodiment
2.9. Flow of environment request according to present embodiment
2.10. Specific example of transition of episode according to present embodiment
2.11. Inverse reinforcement learning according to present embodiment
2.12. Outline relating to capturing of unknown environment and dangerous environment
2.13. Determination of unknown environment and dangerous environment
2.14. Details relating to capturing of unknown environment and dangerous environment
3. Hardware configuration example
4. Conclusion

### <1. Background according to present disclosure >

### «1.1. Neural network»

A neural network refers to a model imitating a human cranial neural circuit and is technology for implementing a human learning ability on a computer. As described above, one feature of a neural network is that it has a learning ability. In a neural network, artificial neurons (nodes) forming a network by synaptic coupling are able to acquire a problem solving ability by changing a synaptic coupling strength through learning. In other words, a neural network is able to automatically infer a problem resolution rule by repeating learning.

Examples of learning by a neural network can include image recognition and speech recognition. In a neural network, it is possible to recognize an object, or the like, included in an input image by, for example, repeatedly learning an input image pattern. The learning ability of a neural network as described above has attracted attention as a key for advancing development of artificial intelligence. Further, the learning ability of a neural network is expected to be applied in various industrial fields. Examples of application of the learning ability of a neural network can include, for example, autonomous control in various kinds of apparatuses.

### <<1.2. Operation control utilizing neural network>>

Here, autonomous control utilizing a neural network will be described using examples. In recent years, various kinds of apparatuses which autonomously operate without user operation have been developed. The apparatuses as described above include, for example, a self-driving car which does not require control by a driver. The self-driving car recognizes a surrounding environment from information acquired by various kinds of sensors and realizes autonomous travelling in accordance with the recognized environment.

A neural network can be applied to recognition of an environment and control of driving in the self-driving car as described above. In automated driving control, for example, learning machine (hereinafter, also referred to as automated driving AI) which acquires a driving control function through deep learning using a neural network having a multilayer structure may be used. That is, the automated driving AI can perform driving control of an automobile in accordance with a surrounding environment on the basis of environment recognition capability and driving control capability acquired through learning. For example, the automated driving AI can recognize a pedestrian on the basis of observation information observed from a sensor and perform steering wheel control, brake control, or the like to avoid the pedestrian.

### <<1.3. Control learning utilizing physical simulator>>

While outline of control learning by learning machine has been described above, by using simulation by a physical simulator along with learning as described above, it is possible to improve learning efficiency. For example, in a case of learning machine which learns automated driving control, there is a case where it is difficult to perform sufficient learning only through learning in the real world.

For example, in the case where the learning machine is caused to learn driving control in a temperate region, because there is a little opportunity of snowing, it is difficult to learn driving control in a snowing environment. Meanwhile, there is a possibility that it may snow also in a temperate region, and there is also an assumed possibility that automated driving AI which has performed learning in a temperate region may be applied to an automobile which travels in a cold region. In such a case, because the automated driving AI performs driving control in an unknown environment which is different from a learned environment, there is a possibility that accuracy relating to driving control may significantly degrade. Therefore, also in terms of safety, it is preferable to cause the automated driving AI to perform learning in more environments.

In this event, for example, it is possible to put snow carried from a cold region on a course and cause the learning machine to perform control learning on the course. However, because such a method requires much cost and work, improvement also in an operation side is desired. Further, with the method as described above, it is impossible to reproduce weather conditions such as a typhoon and heavy rain, and, further, the method has a limitation in reproduction relating to a dangerous environment such as an accident and rushing out. Therefore, with the above-described method, environments which can be handled are naturally limited.

Meanwhile, with a learning method according to the present disclosure, by realizing control learning utilizing a physical simulator, it is possible to exclude the limitation as described above and reduce cost. That is, with the learning method according to the present disclosure, it is possible to provide automated driving AI which can be applied to more environments by reproducing various environmental models using a physical simulator and causing control learning to be performed in the environmental models.

Here, the above-described physical simulator may be a simulator including a physical engine which simulates a dynamic law. In the present disclosure, by using the physical simulator, it is possible to generate various environmental models which imitate environments in the real world. Note that the physical simulator according to the present disclosure may perform simulation using CG. The physical simulator according to the present disclosure can reproduce various kinds of physical phenomena for CG.

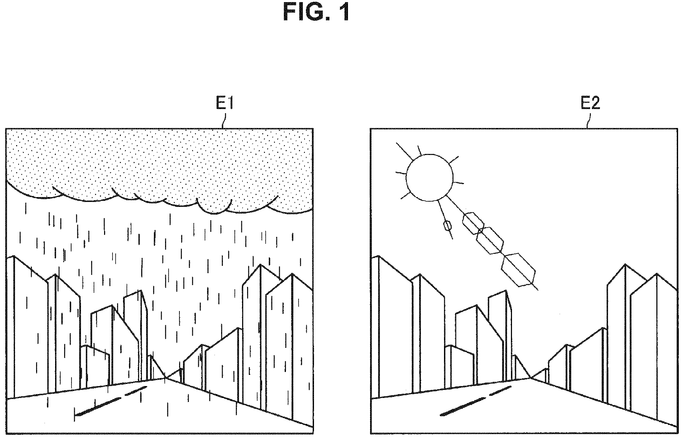

FIG. 1 is a diagram illustrating outline of an environmental model generated by the physical simulator in the present disclosure. Referring to FIG. 1, the physical simulator used in the present disclosure can, for example, reproduce weather conditions in the real world. In FIG. 1, the physical simulator generates different environmental models E1 and E2 in the same topographical information.

In an example illustrated in FIG. 1, the environmental model E1 may be reproduction of raining conditions, and the environmental model E2 may be a model in which conditions of the strong west sun are reproduced. In this manner, in the learning method according to the present disclosure, by generating various different environmental models in the same terrain, it is possible to cause learning machine to perform control learning in environments which are difficult to learn in the real world. Note that, while FIG. 1 illustrates an environmental model relating to weather as an example, the environmental model according to the present disclosure is not limited to such an example.

### <<1.4. Outline according to present disclosure>>

The automated driving AI and the physical simulator according to the present disclosure have been described above. As described above, with the learning method according to the present disclosure, it is possible to realize efficient learning by using an environmental model generated by the physical simulator, in control learning. Further, effects of the present disclosure are not limited to the above-described effect.

According to the technology according to the present disclosure, learning machine can perform control learning while dynamically requesting an environment in accordance with progress of learning. Further, on the basis that the automated driving AI mounted on an automobile detects an unknown environment or a dangerous environment which is different from the learned environments, the automated driving AI can transmit environment information relating to the environment to the physical simulator. Further, in this event, the physical simulator can generate a new environmental model from the received environment information and provide the generated new environmental model to the learning machine.

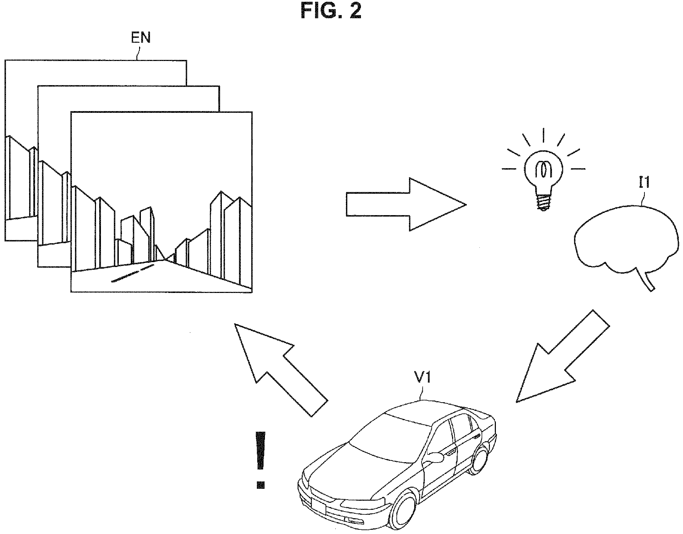

FIG. 2 is a conceptual diagram illustrating outline according to the present disclosure. FIG. 2 illustrates a plurality of environmental models EN generated by the physical simulator, learning machine I1 which performs control learning and a self-driving car V1 on which the automated driving AI which has completed learning is mounted. Here, the learning machine I1 is learning machine which performs control learning of automated driving using the plurality of environmental models EN generated by the physical simulator. The learning machine I1 can perform control learning while dynamically requesting an environment in accordance with progress of learning. For example, the learning machine I1 may request a raining environment to the physical simulator in the case where learning of driving control in a sunny environment has been completed.

Further, the self-driving car V1 may be an automobile which is controlled by the automated driving AI which has completed learning. The self-driving car V1 on which a plurality of sensors are mounted travels in the real world and collects surrounding environment information. Here, in the case where the automated driving AI mounted on the self-driving car V1 detects an unknown environment or a dangerous environment which is different from the learned environments, the automated driving AI can transmit environment information relating to the environment to the physical simulator. In this event, the environment information to be transmitted may be environment information in the real world which is collected by the self-driving car V1.

Further, the physical simulator can generate a new environmental model from the received environment information. That is, the physical simulator can reproduce an unknown environment or a dangerous environment detected in the real world as a new environmental model and add the environment to a plurality of environmental models EM to be provided to the learning machine AI.

Outline according to the present disclosure has been described above. As described above, with the learning method according to the present disclosure, it is possible to perform control learning using an environmental model generated by the physical simulator. Further, in the present disclosure, it is possible to generate a new environmental model on the basis of an unknown environment or a dangerous environment detected by the automated driving AI.

That is, according to the present disclosure, it becomes possible to efficiently generate an environmental model based on observation information in the real world and utilize the environmental model in control learning of the learning machine. Further, the learning machine can perform more efficient control learning by requesting an environmental model in accordance with progress of learning.

Note that, while, in the above-described present disclosure, automated driving AI which controls a self-driving car has been described, the learning method according to the present disclosure is not limited to such an example. The learning method according to the present disclosure can be applied to various kinds of control learning. The learning method according to the present disclosure can be also applied to a robot for manufacturing in a manufacturing facility, a medical surgical robot, or the like. According to the learning method according to the present disclosure, it is possible to realize control learning with high accuracy which matches an environment in the real world.

Further, while, in the present disclosure, learning using a neural network will be mainly described, the learning method according to the present disclosure is not limited to such an example. Technical ideas according to the present disclosure can be generally applied to learning machine which obtains a rule from relationship between input and output.

### <2. Embodiment>

### «2.1. System configuration example according to present embodiment»

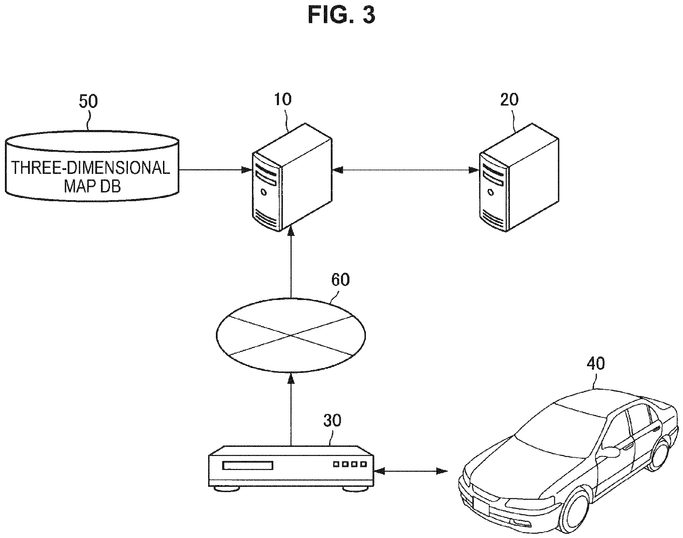

A system configuration according to the present embodiment will be described next. Referring to FIG. 3, a system according to the present embodiment includes an environment generating apparatus 10, a control learning apparatus 20, an information processing apparatus 30, a vehicle 40 and a three-dimensional map DB 50. Further, the environment generating apparatus 10 and the information processing apparatus 30 are connected via a network 60 so as to be able to perform communication with each other.

Here, the environment generating apparatus 10 according to the present embodiment may be an information processing apparatus which generates an environmental model. That is, the environment generating apparatus 10 can generate an environmental model on the basis of environment information (hereinafter, also referred to as environmental parameters) of the real world acquired by the information processing apparatus 30. Further, the environment generating apparatus 10 has a function as a physical simulator which simulates behavior of a control target in the generated environmental model.

Further, the control learning apparatus 20 according to the present embodiment may be an information processing apparatus which performs control learning relating to automated driving using the environmental model generated by the environment generating apparatus 10. The control learning apparatus 20 can dynamically request an environmental model in accordance with progress of learning.

Further, the information processing apparatus 30 according to the present embodiment may be an automated driving apparatus which acquires driving control capability through learning. That is, the information processing apparatus 30 can be said as the control learning apparatus 20 which has completed control learning relating to automated driving. Further, the information processing apparatus 30 according to the present embodiment may be game machine, a driving simulator, or the like. In the case where the information processing apparatus 30 is game machine, or the like, the information processing apparatus 30 can transmit environmental parameters and control information acquired on a game to the environment generating apparatus 10.

Further, the vehicle 40 according to the present embodiment may be a control target of the information processing apparatus 30. That is, the vehicle 40 can be said as a self-driving car which travels by control by the information processing apparatus 30. Here, the vehicle 40 may have various sensors for observing a state of the real world. The above-described sensor includes, for example, a RGB-D camera, a laser range finder, a GPS, Wi-Fi (registered trademark), a geomagnetic sensor, a pressure sensor, an acceleration sensor, a gyro sensor, a vibration sensor, or the like.

Further, the three-dimensional map DB 50 is a database which stores a three-dimensional map used in simulation by the environment generating apparatus 10. The three-dimensional map DB 50 has a function of handing over held map information in response to a request from the environment generating apparatus 10. Note that the three-dimensional map held by the three-dimensional map DB may be a three-dimensional feature point map or a polygonised three-dimensional map. Further, the three-dimensional map according to the present embodiment is not limited to a map indicated with a group of feature points relating to a stationary object and may be various maps in which color information of each feature point, attribute information and physical property information based on an object recognition result, or the like, is added.

Further, the network 60 has a function of connecting the environment generating apparatus 10 and the control learning apparatus 20. The network 60 may include a public network such as the Internet, a telephone network and a satellite communication network, various kinds of local area networks (LAN) including Ethernet (registered trademark), a wide area network (WAN), or the like. Further, the network 60 may include a private network such as an internet protocol-virtual private network (IP-VPN).

The system configuration example according to the present embodiment has been described above. Note that, in the above description, a case has been described as an example where the environment generating apparatus 10 and the control learning apparatus 20 are respectively provided as separate apparatuses. In this case, the environment generating apparatus 10 may perform communication with a plurality of control learning apparatuses 20. That is, the environment generating apparatus 10 can perform physical simulation relating to the plurality of control learning apparatuses 20. That is, the environment generating apparatus 10 according to the present embodiment can realize physical simulation which supports multi-agent. In the control learning relating to automated driving, operation of other vehicles including an oncoming vehicle is important. Therefore, by the environment generating apparatus 10 causing a plurality of virtual automobiles controlled by the automated AI to travel within simulation, the automated driving AI can perform control learning while observing each other's operation.

Meanwhile, the environment generating apparatus 10 and the control learning apparatus 20 according to the present embodiment may be configured as the same apparatus. The system configuration according to the present embodiment can be changed as appropriate in accordance with specifications and operation of each apparatus.

### <<2.2. Environment generating apparatus 10»

The environment generating apparatus 10 according to the present embodiment will be described in detail next. The environment generating apparatus 10 according to the present embodiment has a function of generating response information relating to a control target in the environmental model generated on the basis of the environmental parameters. Further, the environment generating apparatus 10 has a function of transmitting the above-described response information and the environmental parameters to the control learning apparatus 20. That is, the environment generating apparatus 10 may transmit response information relating to a self-driving car controlled by the control learning apparatus 20 in the environmental model and the environmental parameters associated with the environmental model to the control learning apparatus 20.

Further, the environment generating apparatus 10 according to the present embodiment can receive environmental parameters relating to an unlearned environment state and generate an environmental model on the basis of the environmental parameters. That is, the environment generating apparatus 10 can receive environmental parameters relating to an unknown environment or a dangerous environment from the information processing apparatus 30 and generate an environmental model based on the environmental parameters.

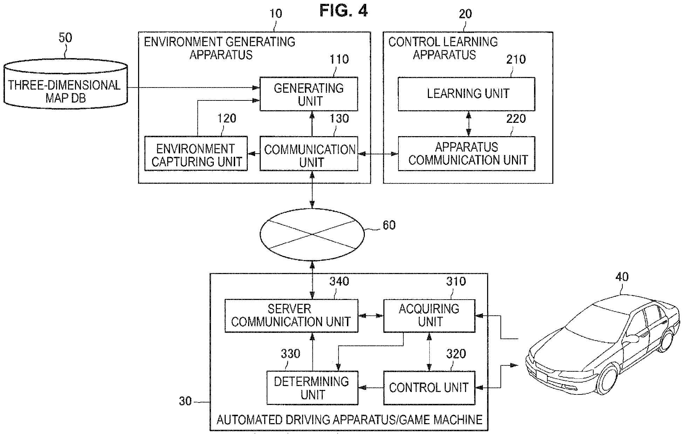

FIG. 4 is a functional block diagram relating to the environment generating apparatus 10, the control learning apparatus 20 and the information processing apparatus 30 according to the present embodiment. Referring to FIG. 4, the environment generating apparatus 10 according to the present embodiment includes a generating unit 110, an environment capturing unit 120 and a communication unit 130. Functions provided at the above-described components will be described below.

### (Generating unit 110)

The generating unit 110 has a function of generating an environmental model on the basis of environmental parameters. Further, the generating unit 110 can generate response information relating to a first control target in the generated environmental model. Here, the above-described first control target may be a virtual self-driving car controlled by the control learning apparatus 20 in the environmental model. That is, the generating unit 110 can simulate behavior of the virtual self-driving car on the basis of the control information acquired from the control learning apparatus 20.

Note that the above-described control information may include, for example, information relating to a steering wheel, an accelerator, a brake, or the like. Further, the control information according to the present embodiment is not limited to the above-described examples, and may include, for example, information relating to shift of gear, lighting of a light, horn, a parking brake, an air conditioner, or the like. Further, the above-described control information can include information relating to sensor cleaning, an active sensor, self-calibration relating to a sensor and a drive system, information communication with other vehicles or various kinds of servers, or the like. That is, the control information according to the present embodiment may be various kinds of information which can be acquired from a target object.

Further, here, the above-described response information may include image information, sound information, text information, various kinds of numerical data, or the like, based on a simulation result. The above-described response information can be said as various kinds of information acquired from sensors provided at the virtual self-driving car. The response information may be a data set associated with a time axis acquired in a simulation episode.

### (Environment capturing unit 120)

The environment capturing unit 120 can generate an environmental model file on the basis of the environmental parameters relating to an unknown environment and a dangerous environment received from the information processing apparatus 30 and capture the environmental model file as a new environment. In this event, the environment capturing unit 120 may classify the received environmental parameters into a plurality of clusters and perform generated model learning for each cluster. Details of the above-described functions of the environment capturing unit 120 will be described later.

### (Communication unit 130)

The communication unit 130 has a function of performing communication between the control learning apparatus 20 and the information processing apparatus 30. That is, the communication unit 130 may have both a function as a transmitting unit and a function as a receiving unit. Specifically, the communication unit 130 can transmit the response information generated by the generating unit 110 and the environmental parameters associated with the environmental model to the control learning apparatus 20. Further, the communication unit 130 may transmit reward parameters relating to machine learning to the control learning apparatus 20. The control learning apparatus 20 can perform reinforcement learning using the above-described reward parameters.

Further, the communication unit 130 may transmit expert information relating to control of a control target to the control learning apparatus 20. The control learning apparatus 20 can perform inverse reinforcement learning using the above-described expert information. Here, the expert information according to the present embodiment may be log information relating to automobile control and may include a driving control log of actual driving by the user, a control log of a virtual automobile on a game, a control log by automated driving AI which has completed learning, or the like.

Further, the communication unit 130 has a function of receiving sensor information acquired from on or a plurality of sensors provided at a second control target. Still further, the communication unit 130 may receive control information or expert information acquired from the second control target. Note that, here, the above-described second control target may be the vehicle 40 controlled by the information processing apparatus 30 or a virtual automobile on a game. Further, the communication unit 130 may receive reward parameters relating to control learning by the control learning apparatus 20 from the information processing apparatus 30.

### <<2.3. Control learning apparatus 20»

The control learning apparatus 20 according to the present embodiment will be described in detail next. The control learning apparatus 20 according to the present embodiment has a function of receiving response information relating to a control target in an environmental model generated on the basis of a first environmental parameter and the first environmental parameter. Further, the control learning apparatus 20 can perform machine learning relating to control of the control target using the received response information and first environmental parameter. Here, the above-described first environmental parameter may be an environmental parameter transmitted from the information processing apparatus 30, an environmental parameter input by the user, an environmental parameter held in advance by the environment generating apparatus 10, or the like.

Further, the control learning apparatus 20 has a function of transmitting a second environmental parameter in accordance with a result of machine learning to the environment generating apparatus 10. Here, the above-described second environmental parameter may be an environmental parameter for requesting an environmental model in accordance with progress of learning to the environment generating apparatus 10. That is, the environment generating apparatus 10 performs physical simulation using an environmental model in accordance with the environmental parameter received from the control learning apparatus 20.

Referring to FIG. 4, the control learning apparatus 20 according to the present embodiment includes a learning unit 210 and an apparatus communication unit 220. Functions provided at the above-described components will be described below.

### (Learning unit 210)

The learning unit 210 has a function of performing machine learning relating to control of a control target using the received response information and environmental parameters. In this event, the learning unit 210 can perform reinforcement learning using the received reward parameters. Further, the learning unit 210 may perform inverse reinforcement learning using the received expert information. A learning method by the learning unit 210 can be designed as appropriate in accordance with circumstances. Note that, in the present embodiment, the above-described control target may be self-driving car.

Further, the learning unit 210 has a function of determining an environmental model to be requested to the environment generating apparatus 10 in accordance with progress of learning. For example, the learning unit 210 may determine to request a raining environment on the basis that learning accuracy relating to a sunny environment exceeds a predetermined threshold. By the learning unit 210 making the above-described determination, it is possible to dynamically and efficiently realize control learning which supports various environments.

### (Apparatus communication unit 220)

The apparatus communication unit 220 has a function of performing communication with the environment generating apparatus 10. Specifically, the apparatus communication unit 220 can receive the response information relating to a control target in an environmental model generated on the basis of environmental parameters and the environmental parameters. Further, the apparatus communication unit 220 can receive reward parameters and expert information relating to machine learning. By this means, the learning unit 210 can perform reinforcement learning and inverse reinforcement learning relating to control learning.

Further, the apparatus communication unit 220 has a function of transmitting the control information output by the learning unit 210 on the basis of each received information to the environment generating apparatus 10. Here, the above-described control information may be control information relating to a virtual automobile on the environmental model controlled by the learning unit 210. That is, the apparatus communication unit 220 can acquire information relating to control determined by the learning unit 210 and return the information to the environment generating apparatus 10. Further, the apparatus communication unit 220 may further transmit environmental parameters for requesting an environmental model in accordance with progress of learning to the environment generating apparatus 10.

### <<2.4. Information processing apparatus 30>>

The information processing apparatus 30 according to the present embodiment will be described in detail next. As described above, the information processing apparatus 30 according to the present embodiment may be a self-driving apparatus which acquires driving control capability through learning or may be game machine which controls a simulation game relating to behavior of an automobile.

The information processing apparatus 30 according to the present embodiment has a function of acquiring environmental parameters relating to an environment state. Further, the information processing apparatus 30 can determine whether or not the environment state has been learned on the basis of the acquired environmental parameters. Further, the information processing apparatus 30 can transmit the environmental parameters relating to the environment state which is determined not to have been learned to the environment generating apparatus 10. That is, the information processing apparatus 30 according to the present embodiment determines an unknown environment or a dangerous environment on the basis of the acquired environmental parameters and transmits the environmental parameters relating to the environment to the environment generating apparatus 10.

Note that, in the case where the information processing apparatus 30 is game machine, the above-described environmental parameters may be environmental parameters acquired from an environment constructed on a game. The information processing apparatus 30 can, for example, extract environmental parameters from movement of the sun, a raining condition, or the like, reproduced on a game and transmit the environmental parameters to the environment generating apparatus 10.

Referring to FIG. 4, the information processing apparatus 30 according to the present embodiment includes an acquiring unit 310, a control unit 320, a determining unit 330 and a server communication unit 340. Functions provided at the above-described components will be described below.

### (Acquiring unit 310)

The acquiring unit 310 may have a function as a sensor information acquiring unit which acquires sensor information from one or more sensors. In the case where the information processing apparatus 30 is an automated driving apparatus, the acquiring unit 310 can acquire the above-described sensor information from sensors provided at the vehicle 40 which is a control target. Further, in the case where the information processing apparatus 30 is game machine, the acquiring unit 310 can acquire the above-described sensor information from a virtual sensor provided at a virtual automobile on a game.

Further, the acquiring unit 310 has a function as a control information acquiring unit which acquires control information relating to control of a control target. Here, the above-described control information may be, for example, control information relating to driving control of a steering wheel, an accelerator, a brake, or the like. Further, as described above, the control information may be various kinds of information which can be acquired from a control target. In the case where the information processing apparatus 30 is an automated driving apparatus, the acquiring unit 310 may acquire control information relating to the vehicle 40 which is a control target. Further, in the case where the information processing apparatus 30 is game machine, the acquiring unit 310 may acquire control information relating to a virtual automobile which is a control target on a game.

Further, the acquiring unit 310 has a function as an environment acquiring unit which acquires environmental parameters relating to the environment state. In the case where the information processing apparatus 30 is an automated driving apparatus, the acquiring unit 310 can acquire the above-described environmental parameters from various kinds of sensors provided at the vehicle 40 or information of weather forecast, or the like. Further, in the case where the information processing apparatus 30 is game machine, the acquiring unit 310 can acquire the above-described environmental parameters from a virtual sensor provided at a virtual automobile on a game or various kinds of setting data on the game.

### (Control unit 320)

The control unit 320 has a function of controlling behavior of a control target. In the case where the information processing apparatus 30 is an automated driving apparatus, the control unit 320 may perform control relating to driving of the vehicle 40. In this case, the information processing apparatus 30 can cause the vehicle 40 to perform automated driving on the basis of sensor information, or the like, acquired from various kinds of sensors provided at the vehicle 40. Further, in the case where the information processing apparatus 30 is game machine, the control unit 320 may control driving of a virtual automobile on a game or various kinds of functions relating to the game.

### (Determining unit 330)

The determining unit 330 has a function of determining whether or not the environment state has been learned on the basis of the acquired various kinds of information. That is, the determining unit 330 can determine an unknown environment or a dangerous environment on the basis of the environmental parameters, sensor information, control information, or the like. Further, in the case where it is determined that the environment state has not been learned, the determining unit 330 can generate notification data based on the determination. The above-described notification data may be data for notifying a passenger of the vehicle 40 of detection of an unknown environment or a dangerous environment. Details of the functions provided at the determining unit 330 will be described later.

### (Server communication unit 340)

The server communication unit has a function of performing communication with the environment generating apparatus 10. Specifically, the server communication unit 340 has a function as a transmitting unit which transmits environmental parameters relating to the environment state to the environment generating apparatus 10 on the basis that the determining unit 330 determines that the environment state has not been learned. Further, the server communication unit 340 can transmit the sensor information acquired by the acquiring unit 310 and the control information relating to control of a control target to the environment generating apparatus 10.

Further, the server communication unit 340 may transmit the reward parameters and the expert information to the environment generating apparatus 10 on the basis of various kinds of information acquired by the acquiring unit 310. Still further, the server communication unit 340 can transmit the notification data generated by the determining unit 330 to a connected display apparatus, or the like.

### <<2.5. Environmental parameters according to present embodiment>>

The functions provided at the various kinds of information processing apparatuses according to the present embodiment have been described above. Here, the environmental parameters used by the above-described environment generating apparatus 10, control learning apparatus 20 and information processing apparatus 30 will be described in detail.

The environmental parameters according to the present embodiment may include external parameters which do not depend on a state of a control target and internal parameters which depend on the state of the control target. Here, the above-described external parameters may be parameters relating to an environment independent of the control target. Further, the above-described internal parameters may be parameters closely relating to the control target. The above-described external parameters and internal parameters will be specifically described below using a case where the control target is an automobile as an example.

### (External parameters)

The external parameters according to the present embodiment include geographical information, time information, weather conditions, outdoor information, indoor information, information relating to a traffic object, road surface information, or the like. The external parameters may be parameters generated from the weather information acquired from various kinds of sensors provided at the vehicle 40 or the Internet.

Here, the above-described geographical information may be geographical information in an environment around a location where the vehicle 40 travels. The geographical information may include, for example, country name, area name, a coordinate position, or the like.

Further, the above-described time information may be information relating to time when the environmental parameters are acquired. The time information may include, for example, time, date, a time slot, season, a position of the sun, or the like.

Further, the above-described weather conditions may be information relating to a weather state in an environment around a location where the vehicle 40 travels. The weather information may include, for example, weather, a size of a raindrop, an amount of rainfall, a type of cloud, an amount of cloud, an atmospheric phenomenon, quantitative information, or the like.

The above-described weather may include, for example, information of clear and sunny, sunny, obscured sky, cloudy, smog, dust, storm, drifting snow, mist, misty rain, rain, snowy rain, snow, snow hail, hailstone, strong west sun, or the like.

Further, the above-described types of cloud may include, for example, information of cirrus cloud, cirrostratus cloud, cirrocumulus cloud, cumulonimbus cloud, altocumulus cloud, nimbostratus, cumulostratus, cumulus cloud, stratus, or the like.

Further, the above-described atmospheric phenomenon may include information of a typhoon, a cyclone, a tornado, a snowstorm, a sandstorm, mirage, aurora, a thunder, big wind, a squall, or the like. Further, the above-described quantitative information may include, for example, information of a temperature, humidity, or the like.

Further, the outdoor information included in the external parameters may be environment information relating to outdoor among an environment around a location where the vehicle 40 travels. The outdoor information may include information relating to an object on a road such as a moving object and a still object. Here, the moving object may include, for example, a pedestrian, a vehicle, a moving object, or the like. Further, the information relating to the moving object may include a more detailed type and attribute information.

For example, in a case of a vehicle, the information may include a type of a vehicle of each manufacturer, a category of a vehicle, or the like. The category of a vehicle may be, for example, heavy machine, an agricultural vehicle, two-wheels, a heavy truck, a bus, a special purpose vehicle, a wheelchair, a unicycle, or the like. Further, in a case of animal, the information may include a type such as a cow, a deer, a cat, a dog and a bird.

Further, in the case where the above-described moving objet is a pedestrian, information of the pedestrian may include attribute information and state information. Here, the attribute information may be, for example, a race, a sex, an age group, or the like. Further, the state information may include, for example, running, standing, sitting, down, riding a skateboard, using a stick, pulling a suitcase, opening an umbrella, pushing a baby carriage, walking with a pet, and carrying a large baggage. Still further, the state information may include cloths of the pedestrian (such as whether he/she wears light cloths or wears a coat).

Further, information relating to the moving object may include information relating to a movement pattern. For example, in the case where the moving object is a various kinds of vehicles, the above-described movement pattern may include, for example, rushing out, sudden starting, abrupt steering, or the like. The environment generating apparatus 10 according to the present embodiment can reproduce various conditions by capturing the movement patterns as described above as environmental models.

Further, the still object information included in the outdoor information may include, for example, information of a garden tree, a tree, trash, an object relating to road work, a road closed sign, a fence, a guard rail, or the like.

Further, the indoor information included in the external parameters may be, for example, information relating to characteristics of the indoor information. The indoor information may include, for example, a type and characteristics of various kinds of rooms, a manufacturing facility, a factory, an airport, a sport facility, or the like.

Further, information relating to a traffic object included in the external parameters may be various kinds of information relating to traffic. The information relating to the traffic object may include, for example, a sign (including a country-specific or area-specific sign), a traffic light, a crosswalk, a stop line, or the like.

Further, the road surface information included in the external parameters may be road surface information of a road on which the vehicle 40 travels. The road surface information may include, for example, information of frost, a puddle, dirt, frozen, snow cover, or the like.

The external parameters according to the present embodiment have been described in detail above using examples. As described above, the external parameters according to the present embodiment are parameters which relate to an environment and which are independent of the control target. It is possible to realize control learning in accordance with various environments by the environment generating apparatus 10 according to the present embodiment generating an environmental model on the basis of the external parameters.

### (Internal parameters)

Meanwhile, the internal parameters according to the present embodiment are environmental parameters which depend on a state of the control target. The internal parameters may include, for example, information relating to a state of a vehicle body, a loaded object and a passenger. The environment generating apparatus 10 according to the present embodiment can perform simulation in accordance with an individual difference of the vehicle 40, for example, by capturing the internal parameters relating to a sensor and a drive system provided at the vehicle 40. That is, according to the environment generating apparatus 10 according to the present embodiment, it is possible to effectively realize calibration for absorbing an individual difference of apparatuses.

Here, the above-described vehicle body information may include characteristics information, installation position information, or the like, of each part. Specifically, the vehicle body information may include information relating to age of service (aged degradation index) of each part or variation of performance. Further, the vehicle body information may include, for example, information in accordance with characteristics of each part, such as a drive system, a steering wheel, a brake system and a sensor system.

For example, the drive system information may include information of a temperature, a torque, response characteristics, or the like. The steering wheel information may include information of response characteristics, or the like. The brake system information may include information of abrasion, a friction coefficient, temperature characteristics, a degree of degradation, or the like. Further, the sensor system information may include information relating to each sensor such as an image sensor, a lidar, a millimeter wave radar, a depth sensor and a microphone. Still further, the sensor system information may include information of a position where each sensor is attached, a search range, sensor performance, variation relating to the position where each sensor is attached, or the like.

Further, the loaded object information included in the internal parameters may be information relating to a loaded object loaded on the vehicle 40. The loaded object information may include information relating to an external baggage or an internal baggage mounted on a vehicle. Here, the external baggage may include, for example, an object type such as a snowboard, a sky and a board, air resistance information, or the like. Further, the loaded object information may include information of weight, property, or the like, of a baggage to be loaded.

Further, the passenger information included in the internal parameters may be information relating to a passenger who gets on the vehicle 40. The passenger information may include, for example, the number of passengers and attribute information of the passenger. The attribute information of the passenger may include, for example, an attribute such as a pregnant woman, an elderly person, a baby and a disabled person.

The internal parameters according to the present embodiment have been described in detail above using examples. As described above, the internal parameters according to the present embodiment are parameters closely relating to the control target. The reward parameters according to the present embodiment may include parameters relating to a distance to a destination, ride quality, the number of times of contact, infringement on traffic rules or fuel consumption. It is possible to realize control learning in accordance with a type and an individual difference of the control target by the environment generating apparatus 10 according to the present embodiment generating an environmental model on the basis of the internal parameters.

### <<2.6. Reward parameters according to present embodiment>>

Subsequently, an example of the reward parameters according to the present embodiment will be described in detail. As described above, the control learning apparatus 20 according to the present embodiment can perform reinforcement learning using the reward parameters. Specific examples of the reward parameters in the case where the control target of the control learning apparatus 20 according to the present embodiment is the vehicle 40 will be described below.

The reward parameters relating to the automated driving control of the present embodiment may include, for example, a reward relating to a distance to a destination. The above-described reward may be set while, for example, a pathway distance, the number of times of change of a route due to a mistake in the route, or the like, is taken into account.

Further, the reward parameters according to the present embodiment may include, for example, a reward relating to ride quality. The above-described reward may be set while, for example, an amount of vibration relating to acceleration and angular velocity, the number of times of sudden braking, or the like, is taken into account.

Further, the reward parameters according to the present embodiment may include, for example, a reward relating to the number of times of contact. The above-described reward may be set while, for example, the number of times of contact with a person or an object, intensity, or the like, is taken into account.

Further, the reward parameters according to the present embodiment may include, for example, infringement on traffic rules. The above-described reward may be set while, for example, the number of times, a type, or the like, of infringement on traffic rules is taken into account.

Further, the reward parameters according to the present embodiment may include, for example, a reward relating to fuel consumption. The above-described reward may be set while, for example, fuel consumption characteristics information in accordance with each manufacturer, a vehicle type or a category of the vehicle, or the like, is taken into account.

The specific examples of the reward parameters according to the present embodiment have been described in detail above. The above-described each information may be information acquired from various kinds of sensors provided at the vehicle 40. Therefore, in the present embodiment, it is possible to use the reward parameters which are not required to be generated in advance in reinforcement learning. That is, the information processing apparatus 30 can transmit the reward parameters based on the sensor information acquired from the vehicle 40 to the environment generating apparatus 10.

### <<2.7. Input and output relating to control learning of present embodiment>>

The environmental parameters and the reward parameters used in the present embodiment have been described in detail above. Input and output relating to control learning of the present embodiment will be described in detail next. As described above, the environment generating apparatus 10 according to the present embodiment can simulate behavior of a virtual automobile controlled by the control learning apparatus 20 in an environmental model generated on the basis of environmental parameters. Further, the control learning apparatus 20 can request an environmental model to be used for the next learning to the environment generating apparatus 10 in accordance with progress of learning.

### (Outline of input and output relating to control learning)

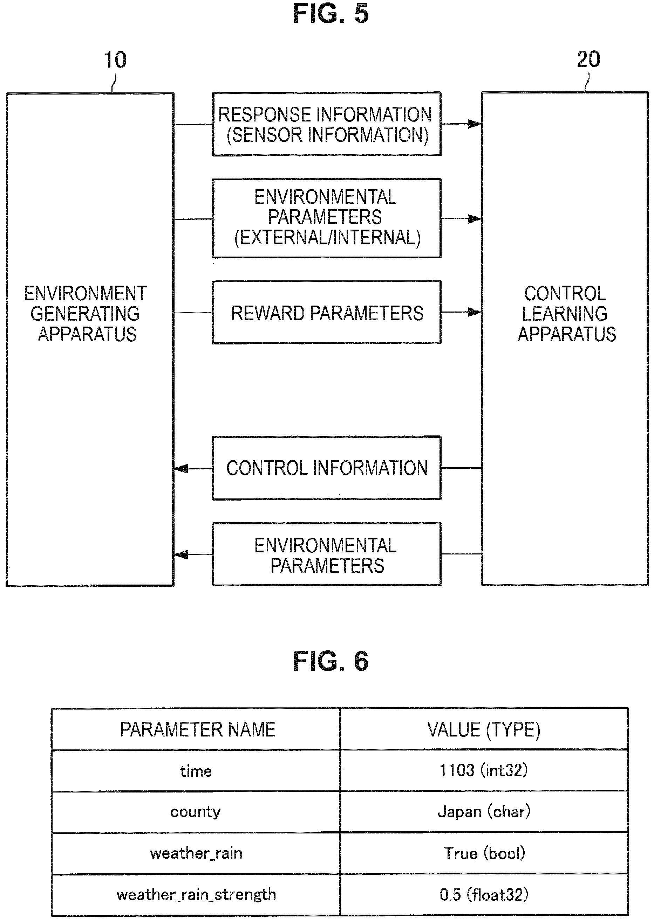

FIG. 5 is a conceptual diagram illustrating outline of input and output relating to control learning of the present embodiment. An example in FIG. 5 illustrates a case where the control learning apparatus 20 performs reinforcement learning. Referring to FIG. 5, the environment generating apparatus 10 transmits response information, environmental parameters and reward parameters to the control learning apparatus 20. Here, as described above, the above-described response information may include image information, sound information, text information, various kinds of numerical data, or the like, based on a simulation result.

In this event, the control learning apparatus 20 can perform control learning of the virtual automobile on the basis of the above-described input information. Further, the control learning apparatus 20 can perform environment recognition learning on the basis of the input environmental parameters in parallel with the above-described control learning. In this event, the control learning apparatus 20 determines control of the control target on the basis of the input information and transmits control information relating to the control to the environment generating apparatus 10. Further, the control learning apparatus 20 can generate environmental parameters relating to an environmental model to be requested from a result of environment recognition based on the input information and transmit the environmental parameters to the environment generating apparatus 10.

FIG. 6 is an example of an API used by the environment generating apparatus 10 and the control learning apparatus 20 to pass environmental parameters. In an example in FIG. 6, as the environmental parameters, time information, country information, a rain flag and rain intensity are indicated as values in accordance with respective data types. As illustrated in FIG. 6, in the present embodiment, it is possible to transmit and receive environmental parameters by setting function specifications for each environmental parameter and using an API based on the specifications.

### (Details of input and output relating to control learning)

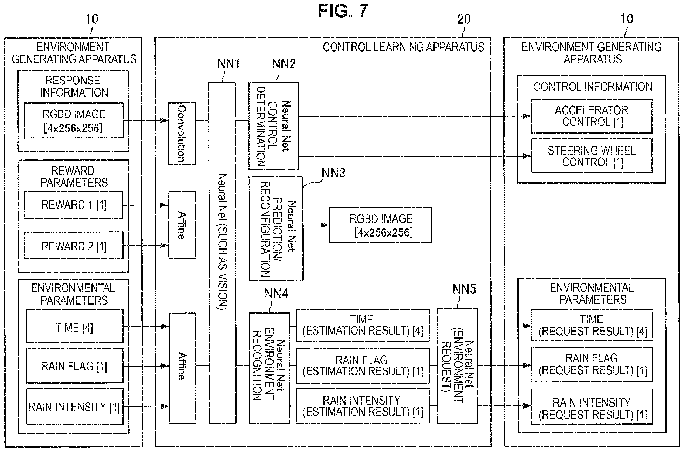

Subsequently, input and output relating to control learning of the present embodiment will be described in more detail with reference to FIG. 7. FIG. 7 is a conceptual diagram of input and output schematically illustrating a network structure relating to the control learning apparatus 20. Referring to FIG. 7, sensor information (response information), the reward parameters and the environmental parameters input from the environment generating apparatus 10 are respectively input to a Convolution layer and an Affine layer provided at the control learning apparatus 20. Note that, while, in FIG. 7, numbers indicated in brackets along with the reward parameters and the environmental parameters are values indicating the number of elements of each parameter, the number of elements of each parameter is not limited to such an example.

Subsequently, information output from each layer is input to a network NN1. Here, the network NN1 may have a function corresponding to a visual cortex of a person. As described above, the control learning apparatus 20 according to the present embodiment can perform control learning and environment recognition learning in parallel. In this event, a network NN2 relating to control determination and a network NN4 relating to environment recognition which will be described later may share the network NN1 corresponding to the visual cortex as an input source. By this means, it can be expected that performance of the network NN1 is improved in accordance with improvement of environment recognition capability, which indirectly contributes to more efficient control learning.

Note that, while FIG. 7 illustrates a case where image information is input as the response information as an example, the response information according to the present embodiment is not limited to such an example, and may include various kinds of data. Therefore, it is expected that, other than the network NN1 illustrated in FIG. 7, networks having various kinds of characteristics are obtained, which indirectly contributes to control learning. Note that the network NN1 corresponding to the visual cortex does not have to explicitly exist as illustrated in FIG. 7. It is assumed that a synergetic effect as described above can be obtained by input and output of each network being connected upon learning.

Further, output from the network NN1 is input to the networks NN2 to NN4. Here, the network NN2 may be a network relating to control determination. The network NN3 may be a network relating to prediction and reconfiguration. Further, the network NN4 may be a network relating to environment recognition.

The network NN2 relating to control determination performs control determination of the control target on the basis of input from the network NN1 and outputs control information relating to the control. In an example illustrated in FIG. 7, the network NN2 outputs control information relating to accelerator control and steering wheel control.

Further, the network NN3 relating to prediction and reconfiguration outputs image information reconfigured on the basis of input from the network NN1.

Further, the network NN4 relating to environment recognition outputs a result of environment estimation based on input from the network NN1. Subsequently, the network NN5 relating to environment request can output environmental parameters for requesting an environmental model to be used for next learning on the basis of the environment estimation result output from the network NN4. The control learning apparatus 20 transmits the control information output from the network NN2 and the environmental parameters output from the network NN5 to the environment generating apparatus 10 and finishes one input/output cycle.

Details of the input and output relating to control learning by the control learning apparatus 20 has been described above. The control learning apparatus 20 can perform control learning and environment recognition learning by repeatedly executing the above-described cycle. As described above, according to the control learning apparatus 20 according to the present embodiment, it can be expected that control learning is made more efficient indirectly by environment recognition.

### <<2.8. Flow of control learning according to present embodiment>>

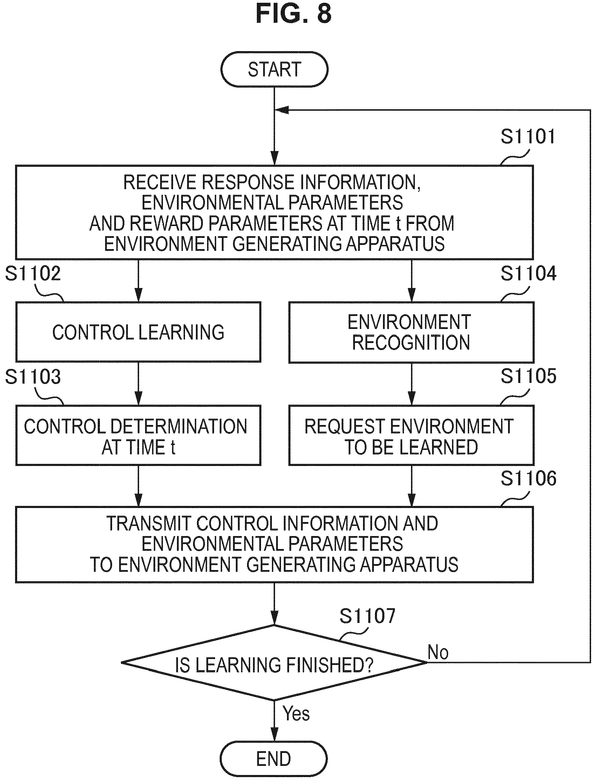

Flow of control learning according to the present embodiment will be described in detail next. FIG. 8 is a flowchart illustrating flow of learning according to the present embodiment.

Referring to FIG. 8, first, the control learning apparatus 20 receives response information, environmental parameters and reward parameters at time t in an episode from the environment generating apparatus 10 (S1101).

Subsequently, the control learning apparatus 20 performs control learning using the information received in step S1101 (S1102). The control learning apparatus 20 may, for example, perform learning in which deep learning and Q learning (Q-Learning) are combined. Further, the control learning apparatus 20 can also perform learning using a behavior function, or the like. That is, the control learning apparatus 20 may determine an index of a state value function, or the like, on the basis of the received response information and perform control learning by maximizing the value. In this event, a method such as deep learning can be used in learning.

The control learning apparatus 20 then performs control determination at time t (S1103). The control learning apparatus 20 can, for example, use a method such as ε-greedy used in reinforcement learning. That is, the control learning apparatus 20 can perform control determination at time t on the basis of the received information and learning machine acquired so far while randomly operating at a determined probability ε.

Meanwhile, the control learning apparatus 20 can perform environment recognition learning in parallel to step S1102 and S1103 (S1104). Here, the control learning apparatus 20 may perform learning of minimizing a prediction error with respect to the received environmental parameters.

For example, the control learning apparatus 20 can estimate a likelihood of rain from the image information and perform learning of minimizing a prediction error with respect to a rain flag included in the environmental parameters. Further, for example, the control learning apparatus 20 can predict rain intensity from the image information and perform learning of minimizing a prediction error with respect to the rain intensity.

Subsequently, the control learning apparatus 20 determines an environment to be requested (S1105). Details of determination of an environment to be requested by the control learning apparatus 20 will be described later.

When control determination in step S1103 and determination of an environment to be requested in step S1105 are completed, the control learning apparatus 20 transmits the control information and the environmental parameters to the environment generating apparatus 10 (S1106).

Then, whether learning is finished is determined (S1107), and in the case where learning is finished (S1107: Yes), the control learning apparatus 20 finishes processing relating to control learning. On the other hand, in the case where learning is not finished (S1107: No), the control learning apparatus 20 repeatedly executes each processing from step S1101 to S1106.

### <<2.9. Flow of environment request according to present embodiment>>

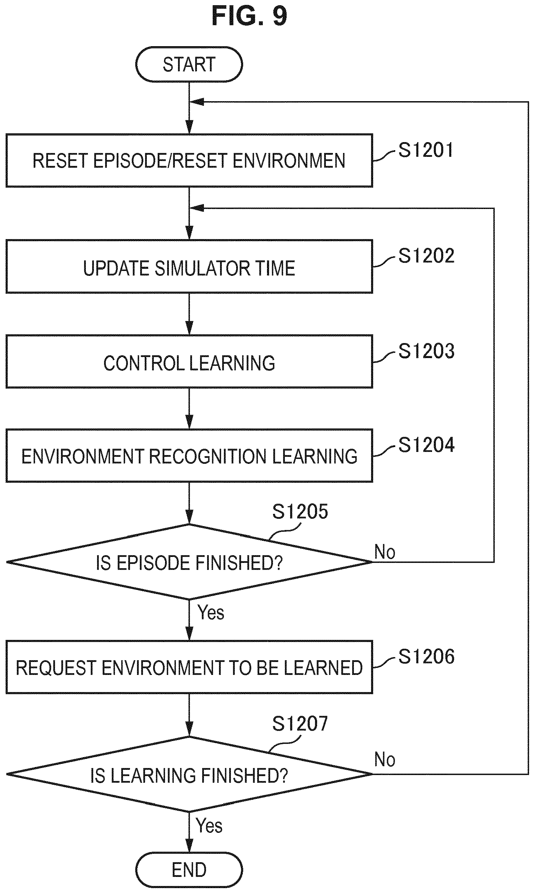

Subsequently, flow of environment request according to the present embodiment will be described in detail. As described above, the control learning apparatus 20 according to the present embodiment can dynamically request an environmental model to be used for next learning on the basis of a result of environment recognition. FIG. 9 is a flowchart illustrating flow of environment request according to the present embodiment.

Referring to FIG. 9, when learning is started, an episode and an environmental model relating to learning are reset (S1201). Subsequently, simulator time by the environment generating apparatus 10 is updated (S1202). In this manner, the environment generating apparatus 10 may have a function for mode setting of execution time. That is, the environment generating apparatus 10 can update the simulator time with a step execution function.

Subsequently, the control learning apparatus 20 performs control learning described using FIG. 8 (S1203). In this event, the control learning apparatus 20 may perform environment recognition learning in parallel with step S1203 (S1204).

Then, the environment generating apparatus 10 determines whether the episode is finished (S1205). In this event, the environment generating apparatus 10 may finish the episode on the basis that predetermined simulator time is reached. Further, in a case of control learning relating to automated driving control, the environment generating apparatus 10 may determine that the episode is finished on the basis of wreckage of a virtual automobile, contact with a person, arrival at a destination, or the like.

Here, in the case where the episode is not finished (S1205: No), processing from step S1202 to S1204 is repeatedly executed. On the other hand, in the case where the episode is finished (S1205: Yes), request for an environmental model by the control learning apparatus 20 is processed (S1206).

In this event, the control learning apparatus 20 may set an environment in which a rate of contribution to learning becomes a maximum as an environment to be requested. The control learning apparatus 20 can, for example, assume combination of environmental parameters in which an environment recognition rate and accuracy of control learning are low as a weak environment. In this case, the control learning apparatus 20 may generate environmental parameters by recombining the above-described combination or making the parameters dispersed in dispersion. By requesting an environmental model relating to the environmental parameters generated as described above, it is possible to realize balanced learning with respect to environments.

Further, the control learning apparatus 20 may regard requesting an environment as one type of control. In this case, the control learning apparatus 20 can perform reinforcement learning so that control performance becomes a maximum within the same framework as a framework of control learning.

Then, whether learning is finished is determined (S1207), and, in the case where learning is to be finished (S1207: Yes), the environment generating apparatus 10 and the control learning apparatus 20 finishes a series of processing. On the other hand, in the case where learning is to be continued (S1207: No), processing from step S1201 to S1206 is repeatedly executed.

In this event, whether learning is finished is determined on the basis of predetermined standards such as the number of times of accidents and travelling time set at a test course. Further, whether learning is finished may be determined on the basis that progress of learning has not been recognized for a predetermined time period. Determination as to whether learning is finished according to the present embodiment can be designed as appropriate.

### «2.10. Specific example of episode transition according to present embodiment»

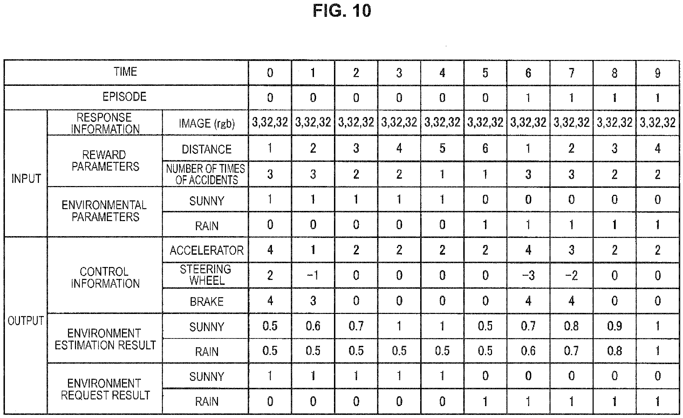

A specific example of episode transition according to the present embodiment will be described next. FIG. 10 is an example illustrating input and output data in an episode for which the control learning apparatus 20 performs reinforcement learning, in chronological order. FIG. 10 indicates time and episode number on a horizontal axis and indicates each piece of input and output data on a vertical axis.

In an example illustrated in FIG. 10, the response information, the reward parameters and the environmental parameters are input to the control learning apparatus 20. Here, an image is indicated as an example of the response information, a distance and the number of times of accidents is indicated as an example of the reward parameters, and a sunny flag and a rain flag are indicated as examples of the environmental parameters.

Further, in an example illustrated in FIG. 10, the control learning apparatus 20 outputs the control information, an environment estimation result and an environment request result on the basis of input information. Here, control information relating to an accelerator, a steering wheel and a brake is indicated as an example of the control information, estimate values relating to sunny and rain are indicated as examples of the environment estimation result, and a sunny flag and a rain flag are indicated as examples of the environment request result.

As described above, the control learning apparatus 20 according to the present embodiment can receive each information at time t and can perform control determination and environment estimation on the basis of the received information. Further, the control learning apparatus 20 can dynamically request an environmental model to be used for learning in accordance with progress of learning. FIG. 10 may be an example which illustrates input and output data relating to the above-described control in chronological order. That is, the control learning apparatus 20 can perform learning by repeating input and output as illustrated in FIG. 10 for each time t.

Note that, referring to FIG. 10, it can be seen that the control learning apparatus 20 requests an environment relating to rain at time t(5). At the following time t(6), the episode is updated, and the environment generating apparatus 10 provides an environmental model relating to rain to the control learning apparatus 20. That is, in an episode 1 at time t(6) and after, the environment generating apparatus 10 transmits environmental parameters indicating a raining environment to the control learning apparatus 20.

As described above, the control learning apparatus 20 according to the present embodiment outputs the control information, the environment estimation result and the environment request result on the basis of the input information at time t. According to the control learning apparatus 20 according to the present embodiment, it is possible to improve learning efficiency by requesting a dynamic environment in accordance with progress of learning.

Note that, while, in the above description, a case has been described as an example where, in response to a request from the control learning apparatus 20, the environment generating apparatus 10 immediately provides an environmental model based on the request, provision of an environmental model according to the present embodiment is not limited to such an example. Specifically, the environment generating apparatus 10 according to the present embodiment can execute simulation in which an environment transition state is taken into account. For example, in the case where the control learning apparatus 20 requests an environment relating to snow, the environment generating apparatus 10 may reproduce transition from start of snowing until snow cover. That is, the environment generating apparatus 10 according to the present embodiment can simulate transition of an environment state which matches laws of physics of heat capacity, a temperature, or the like. By this means, the control learning apparatus 20 can perform learning in accordance with transition of an environment state including weather, so that the control learning apparatus 20 can obtain control capability which matches better an environment in the real world.

Further, the reward parameters according to the present embodiment may be information explicitly input by the user. In this case, the environment generating apparatus 10 may have a learning reproduction function for providing learning process by the control learning apparatus 20 to the user. The user can confirm learning process by the control learning apparatus 20 and input the reward parameters in accordance with the learning process.

### «2.11. Inverse reinforcement learning according to present embodiment»

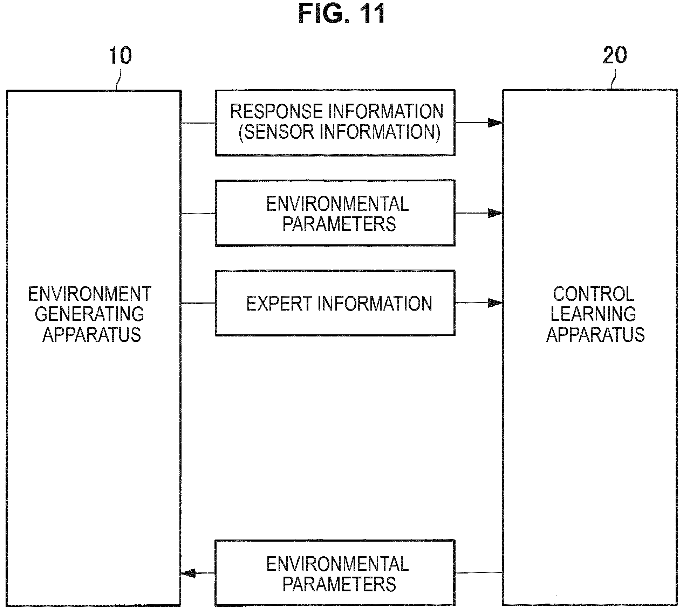

Inverse reinforcement learning according to the present embodiment will be described in detail next. As described above, the control learning apparatus 20 according to the present embodiment can also perform inverse reinforcement learning as well as reinforcement learning. FIG. 11 is a conceptual diagram illustrating outline of input and output relating to inverse reinforcement learning of the present embodiment. Compared to input and output relating to reinforcement learning illustrated in FIG. 5, in inverse reinforcement learning according to the present embodiment, the expert information in place of the reward parameters is input to the control learning apparatus 20. In this event, the control learning apparatus 20 can obtain a reward function inside.

As described above, the expert information according to the present embodiment may be log information relating to automobile control. The expert information according to the present embodiment may include an actual driving control log by the user or the information processing apparatus 30. That is, in the inverse reinforcement learning according to the present embodiment, it is possible to use a control log acquired from an automobile operated by the user or a self-driving car. Further, in the inverse reinforcement learning, it is also possible to use a control log acquired from the vehicle 40 controlled by the information processing apparatus 30.

Further, the expert information according to the present embodiment may include a control log of a virtual automobile on a game. That is, in the inverse reinforcement learning according to the present embodiment, it is possible to use a control log relating to a virtual automobile on a game controlled by the information processing apparatus 30 or a virtual automobile on a game or a simulator operated by the user.

In the case where the user operates a virtual automobile, the environment generating apparatus 10 or the information processing apparatus 30 may have an interface for presenting an environment around the virtual automobile to the user or an interface for accepting user operation. Further, in this case, the environment generating apparatus 10 or the information processing apparatus 30 may have an interface for accepting policy of the user. Here, the above-described policy may be policy of the user with respect to driving. The above-described policy may include, for example, safe driving, in a hurry, giving priority to less waver, or circumstances such as urgency.

The expert information according to the present embodiment has been described above. The control learning apparatus 20 according to the present embodiment can efficiently search for combination of behavior or behavior relating to a circumference on the basis of the behavior by an expert such as a person and perform learning for obtaining behavior optimal for the circumstances. That is, according to the present embodiment, it becomes possible to simulate various states on the basis of control which can be performed by a person, so that the control learning apparatus 20 can achieve driving control further closer to control performed by a person.

Therefore, the control learning apparatus 20 according to the present embodiment may have a function of performing search on the basis of a movement pattern of a person in place of a method such as ε-greedy used in reinforcement learning. Further, the control learning apparatus 20 may have a function of generating experience data to be used for learning by capturing the expert information into a replay memory. That is, the control learning apparatus 20 can use the expert information as one of the episodes as illustrated in FIG. 10.

Further, the expert information may include biological information of the expert associated with the behavior in addition to behavior history information. The above-described biological information may include, for example, information of increase in a heart rate and a blood pressure, eyeball movement, change in a pupil diameter, perspiration, a body temperature, lack of sleep, condition of health, or the like. The control learning apparatus 20 according to the present embodiment can obtain driving control capability closer to that of a person by performing inverse reinforcement learning based on the above-described biological information.

Further, the environment generating apparatus 10 and the control learning apparatus 20 according to the present embodiment may have a function of sorting the expert information. In the inverse reinforcement learning, a reward function of behavior or policy relating to driving is obtained from a control log included in the expert information. In this event, it is required that the control log to be used in the inverse reinforcement learning should comply with consistent policy, or the like. For example, if a control log relating to failure to stop at a red light is captured as the expert information, it becomes difficult for the control learning apparatus 20 to obtain a correct reward function or policy.

Therefore, the environment generating apparatus 10 and the information processing apparatus 30 according to the present embodiment may have a function of sorting only a control log which satisfies the conditions. Specifically, the determining unit 330 of the information processing apparatus 30 according to the present embodiment can determine whether or not a person who controls the control target belongs to a predetermined attribute. The determining unit 330 may, for example, determine good expert information on the basis of driver information. Further, the server communication unit 340 may transmit the control information to the environment generating apparatus 10 on the basis of the above-described determination by the determining unit 330. Here, the above-described driver information may include, for example, biological information, a past driving control log, accident history, personality information, or the like, of a driver.

Further, the above-described sorting may be executed by the environment generating apparatus 10. The environment generating apparatus 10 according to the present embodiment can sort the expert information received from the information processing apparatus 30 and transmit only expert information which satisfies the conditions to the control learning apparatus 20. Specifically, the environment capturing unit 120 of the environment generating apparatus 10 according to the present embodiment may determine whether or not a person who controls the control target belongs to a predetermined attribute. For example, the environment capturing unit 120 can filter the acquired expert information and determine good expert information. In this event, the environment capturing unit 120 may determine expert information on the basis of the above-described driver information. Further, the communication unit 130 may transmit only the good expert information to the control learning apparatus 20 on the basis of the above-described determination by the environment capturing unit 120. That is, the control learning apparatus 20 can perform inverse reinforcement learning using the control information which is determined to belong to the predetermined attribute.

According to the above-described functions provided at the environment generating apparatus 10 and the information processing apparatus 30 according to the present embodiment, it is possible to effectively realize inverse reinforcement learning of the control learning apparatus 20. Note that a plurality of conditions may be set as the above-described conditions for sorting good expert information, or the conditions may be set in accordance with progress of learning of the control learning apparatus 20. For example, the good expert information according to the present embodiment may be defined in accordance with various kinds of policy, such as a driver who can quickly reach a destination and a driver who drives safely.

The inverse reinforcement learning according to the present embodiment has been described above. As described above, the control learning apparatus 20 according to the present embodiment can perform inverse reinforcement learning on the basis of the received expert information. According to the control learning apparatus 20 according to the present embodiment, it is possible to effectively utilize a driving control log by the user or a control log on a game or a simulator, so that it is possible to realize more efficient control learning.

### <<2.12. Outline relating to capturing of unknown environment and dangerous environment>>

Outline relating to capturing of an unknown environment and a dangerous environment of the present embodiment will be described next. As described above, the information processing apparatus 30 according to the present embodiment can determine whether or not the environment state has been learned on the basis of the acquired various kinds of information. That is, the information processing apparatus 30 can determine an unknown environment or a dangerous environment on the basis of the sensor information, the environmental parameters, the control information, or the like.

In this event, the information processing apparatus 30 may transmit the environmental parameters, the sensor information and the control information relating to the environment state which is determined as an unknown environment or a dangerous environment to the environment generating apparatus 10. The environment generating apparatus 10 can generate a new environmental model file relating to the unknown environment or the dangerous environment on the basis of the above-described information received from the information processing apparatus 30 and use the environmental model file for control learning by the control learning apparatus 20.

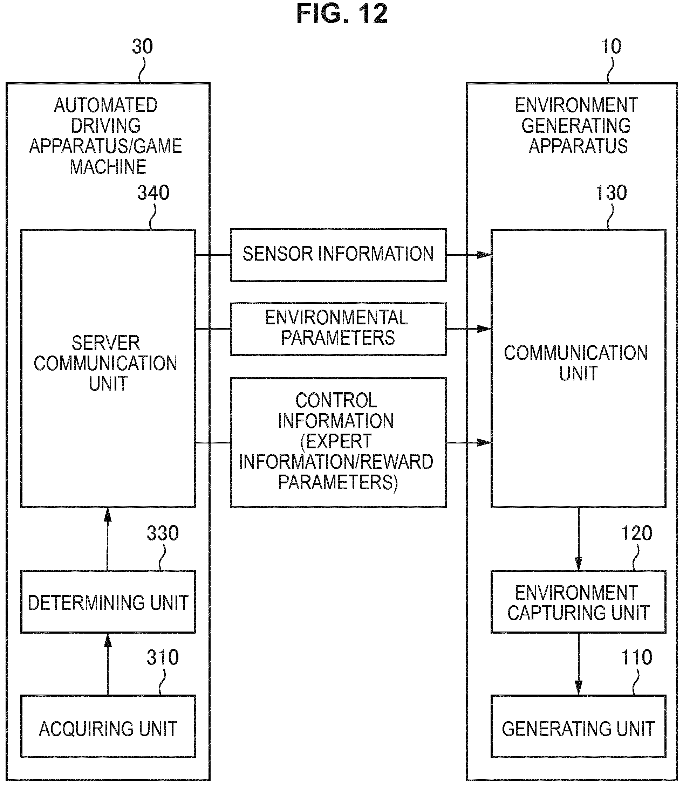

FIG. 12 is a conceptual diagram illustrating outline of input and output relating to the information processing apparatus 30 and the environment generating apparatus 10. Referring to FIG. 12, the determining unit 330 may determine an unknown environment or a dangerous environment on the basis of the information received from the acquiring unit 310. In this event, if the determining unit 330 determines that the environment state is an unknown environment or a dangerous environment, the server communication unit 340 transmits the sensor information, the environmental parameters and the control information to the environment generating apparatus 10 on the basis of determination by the determining unit 330.

Subsequently, the communication unit 130 of the environment generating apparatus 10 hands over the above-described received information to the environment capturing unit 120. Here, the environment capturing unit 120 can generate an environmental model file on the basis of the acquired information and hand over the environmental model file to the generating unit 110. Note that details of generation of an environmental model file by the environment capturing unit 120 will be described later.

The outline relating to capturing of an unknown environment and a dangerous environment of the present embodiment has been described above. Hereinafter, details of determination of an environment by the information processing apparatus 30 and details of capturing of an environment by the environment generating apparatus 10 will be described.

### <<2.13. Determination of unknown environment and dangerous environment>>

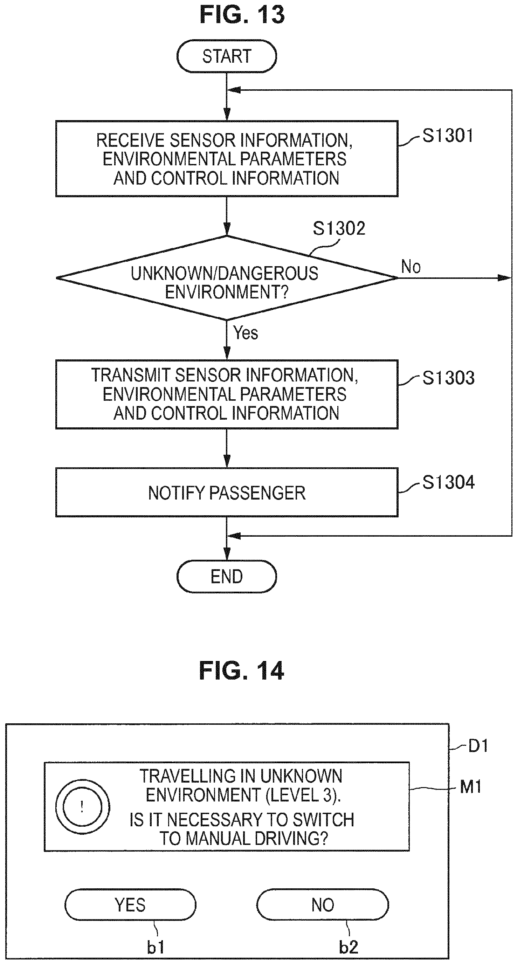

Determination of an unknown environment and a dangerous environment according to the present embodiment will be described in detail next. FIG. 13 is a flowchart illustrating flow of determination by the information processing apparatus 30 according to the present embodiment.

Referring to FIG. 13, first, the acquiring unit 310 of the information processing apparatus 30 acquires the sensor information, the environmental parameters and the control information (S1301). In this event, the acquiring unit 310 may include information acquired from various kinds of sensors provided at the vehicle 40 in the environmental parameters. For example, the acquiring unit 310 can acquire information relating to time and a temperature from a clock or a temperature system provided at the vehicle 40.

Further, the acquiring unit 310 may include information acquired from the Internet in the environmental parameters. The acquiring unit 310 may, for example, generate environmental parameters on the basis of acquired area weather report. Further, the acquiring unit 310 can generate environmental parameters on the basis of a result of recognition. For example, the acquiring unit 310 may include a state of a recognized road surface in the environmental parameters.

The determining unit 330 performs determination relating to an unknown environment and a dangerous environment on the basis of the information received from the acquiring unit 310 (S1302). In this event, in a default state, it is possible to set all environments as unknown environments. Further, for example, a default value may be set for each area.

In step S1302, the determining unit 330 may, for example, perform the above-described determination on the basis of an estimated error of environmental parameters. In this case, the determining unit 330 may estimate environmental parameters from the sensor information and compare an error of the environmental parameters with an error of held information. In this event, the determining unit 330 can determine an unknown environment on the basis that the error exceeds a predetermined threshold.

Further, the determining unit 330 may perform determination on the basis of a result of image reconfiguration by an auto-encoder. Because it is difficult to reproduce an unknown object or a state in accordance with weather which have not been input through learning so far with the auto-encoder, the determining unit 330 can determine an unknown environment on the basis that accuracy of reconfiguration is poor. In this event, the determining unit 330 may compare the information acquired from the acquiring unit 310 with the reconfiguration result using a distance index such as PSNR. In this event, the determining unit 330 can determine an unknown environment on the basis that accuracy of the reconfiguration result does not reach a predetermined threshold.

Further, the determining unit 330 may determine an unknown environment on the basis of future prediction. In this case, the determining unit 330 can perform determination on the basis of a prediction result configured on the basis of past sensor information instead of current sensor information. In this event, the determining unit 330 can determine an unknown environment on the basis that a prediction error exceeds a predetermined threshold.

Further, the determining unit 330 may perform determination on the basis of history of user operation. The determining unit 330 can determine an unknown environment or a dangerous environment on the basis that, for example, an operation pattern which is different from a normal operation pattern is detected from the control information. Further, the determining unit 330 may determine a dangerous environment on the basis that sudden braking or acceleration equal to or greater than a threshold is detected.

Further, the determining unit 330 may determine an unknown environment or a dangerous environment on the basis that the user switches a driving mode to a manual driving mode. The determining unit 330 can perform the above-described determination, for example, by detecting operation by the user who senses an abnormality.

In the case where the determining unit 330 determines that the environment state is known in step S1302 (S1302: No), the processing may be returned to step S1301, and the information processing apparatus 30 may repeat the above-described processing. On the other hand, in the case where the determining unit 330 determines that the environment state is an unknown environment or a dangerous environment (S1302: unknown), the server communication unit 340 transmits the sensor information, the environmental parameters and the control information to the environment generating apparatus 10 (S1303).

Subsequently, the information processing apparatus 30 may notify a passenger, or the like. (S1304). Specifically, when the determining unit 330 determines an unknown environment or a dangerous environment, the determining unit 330 can generate notification data based on the determination. The server communication unit 340 may transmit the above-described notification data to a display unit, or the like, to cause notification content to be displayed.

FIG. 14 illustrates an example of a notification screen displayed at a display unit of in-vehicle equipment, or the like. Referring to FIG. 14, a message M1 based on the above-described notification data and buttons b1 and b2 are displayed in the notification screen D1.

In an example illustrated in FIG. 14, a message which indicates that an unknown environment is detected and which asks for judgement as to whether or not to switch driving to manual driving is displayed in the message M1. Further, as illustrated in FIG. 14, in the message M1, a level, or the like, indicating a degree of unknown determined on the basis of information upon determination may be displayed. The passenger can notice that unknown environment or a dangerous environment is detected by confirming the above-described message and can make subsequent judgement. Further, the passenger can also switch driving to manual driving by operating the button b1 or b2 displayed in the notification screen D1. Note that, while a case has been described as an example where a notification is made using visual information in FIG. 14, the above-described notification is made to the passenger using sound, or the like.

The determination of an unknown environment and a dangerous environment according to the present embodiment has been described above. The information processing apparatus 30 according to the present embodiment may repeatedly execute the processing from step S1301 to S1304 illustrated in FIG. 13 until driving is finished.

According to the information processing apparatus 30 according to the present embodiment, it is possible to dynamically and efficiently collect environment information which is not possessed by the environment generating apparatus 10. Further, the information processing apparatus 30 according to the present embodiment can improve a sense of safety of the passenger or secure safety by notifying the passenger of determined content.

### <<2.14. Details relating to capturing of unknown environment and dangerous environment>>

### (Flow of capturing of environment)

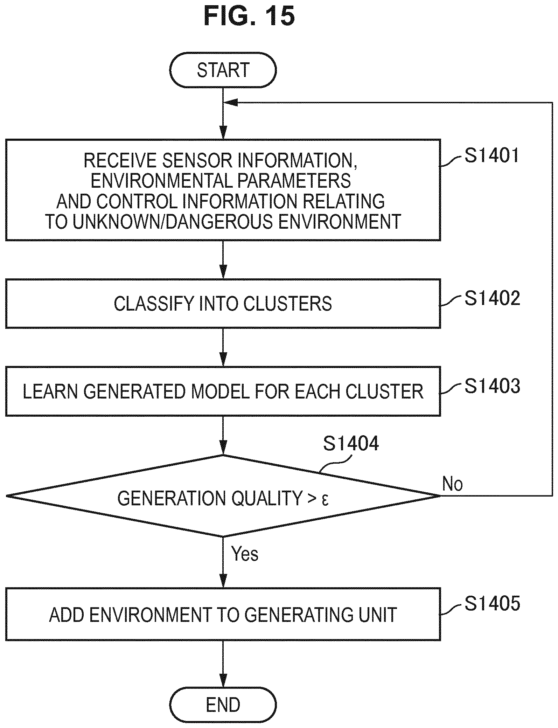

Capturing of an unknown environment and a dangerous environment according to the present embodiment will be described in detail next. The environment generating apparatus 10 according to the present embodiment can generate an environmental model file on the basis of the received information and capture the environmental model file as a new environmental model. FIG. 15 is a flowchart illustrating flow relating to capturing of an unknown environment and a dangerous environment.

Referring to FIG. 15, first, the communication unit 130 of the environment generating apparatus 10 receives the sensor information, the environmental parameters and the control information relating to an unknown environment or a dangerous environment from the information processing apparatus 30 (S1401).

The environment capturing unit 120 then classifies clusters on the basis of the received information (S1402). In this event, the environment capturing unit 120 may classify clusters by determining an identical environment or a non-identical environment by utilizing the same environment determination device.

Further, in this event, the environment capturing unit 120 can also classify clusters on the basis of the acquired geographical information. In this case, it becomes possible to generate an environmental model in accordance with characteristics of a country, an area, or the like, so that the control learning apparatus 20 can perform learning on the basis of an environment for each area.

The environment capturing unit 120 then learns the generated model for each of the classified clusters (S1403). The environment capturing unit 120 can generate a predetermined unknown environmental model by performing learning which projects an unknown environment based on the acquired information in the same coordinate and the same state of view in a standard environment.

The environment capturing unit 120 then determines generation quality of the generated unknown environmental model (S1404). Here, in the case where the above-described generation quality exceeds a predetermined threshold ε (S1404: Yes), the environment capturing unit 120 may cause the generating unit 110 to capture the generated environmental model file (S1405).

On the other hand, in the case where the generation quality does not reach the predetermined threshold ε, the processing may be returned to step S1401, and the environment generating apparatus 10 may collect more information.

### (Examples of unknown environmental model)

The flow of capturing of an environment according to the present embodiment has been described above. Subsequently, examples of the unknown environmental model generated by the above-described processing will be described. The environment generating apparatus 10 according to the present embodiment can, for example, generate an environmental model relating to an unknown object, unknown atmospheric information or unknown motion characteristics on the basis of the received information.

For example, the environment generating apparatus 10 may generate a cluster relating to a predetermined unknown object X by generating an unknown object cluster using an unknown object determination device and performing determination as to an identical object in the cluster. In this event, the environment generating apparatus 10 may, for example, constitute property of material such as a shape in three dimensions from information relating to the unknown object X on the basis that an appearance frequency of the unknown object X in a predetermined area is high, and capture the three-dimensional property of material as a new environmental model.

Further, for example, the environment generating apparatus 10 may generate a cluster relating to a predetermined unknown atmospheric state Y by generating an atmospheric state cluster using an atmospheric state determination device and performing determination as to an identical atmosphere in the cluster. In this event, the environment generating apparatus 10 may generate a new environmental model, for example, by projecting the unknown atmospheric state Y on a normal atmospheric state on the basis that an observation frequency of the unknown atmospheric state Y in a predetermined area is high.

Further, for example, the environment generating apparatus 10 may generate a cluster relating a predetermined unknown motion characteristic Z by generating a motion characteristic cluster using ae motion characteristic determination device and performing determination as to an identical motion characteristic in the cluster. In this event, the environment generating apparatus 10 may generate a new environmental model, for example, by reconfiguring the unknown motion characteristic Z on the basis that an observation frequency of the unknown motion characteristic Z in a predetermined area is high.

Capturing of an unknown environment and a dangerous environment according to the present embodiment has been described in detail above. As described above, the information processing apparatus 30 according to the present embodiment can determine an unknown environment and a dangerous environment and transmit information relating to the environment to the environment generating apparatus 10. Further, the environment generating apparatus 10 according to the present embodiment can generate a new environmental model on the basis of the received information. Note that, while, in the above description, a case has been described where the environment generating apparatus 10 dynamically captures a new environmental model, capturing of an environmental model according to the present embodiment may be performed by the user. By the user creating an environment perceived in the real world as a new environment, it is possible to support environments in the real world more flexibly.

According to the information processing apparatus 30 and the environment generating apparatus 10 according to the present embodiment, it is possible to dynamically and efficiently collect environment information which is not possessed. By this means, it is possible to continuously reduce gap between an environmental model generated by the environment generating apparatus 10 and an environment in the real world, so that it is possible to largely improve efficiency of learning by the control learning apparatus 20.

Further, the environment generating apparatus 10 may use various kinds of functions for realizing the above-described functions. For example, the environment generating apparatus 10 can use a function for storing received information relating to a predetermined environment. In this case, the environment generating apparatus 10 can structuralize the received environmental parameters, control information, reward parameters, or the like, and store the structuralized environmental parameters, control information, reward parameters, or the like, as internal data.

Further, for example, the environment generating apparatus 10 can use a function for loading received circumstances relating to a predetermined environment. In this case, the environment generating apparatus 10 can reproduce the above-described predetermined environment on the basis of the received environmental parameters, control information and reward parameters, structuralized internal data, or the like.

Further, for example, the environment generating apparatus 10 can organize received predetermined environmental circumstances and use a function for generating standard parameters at predetermined coordinate information and time. In this case, the environment generating apparatus 10 can reproduce the above-described predetermined environment on the basis of received environmental parameters, control parameters, reward parameters, or the like, and statistically calculate standard distribution of parameters at the coordinate and the time.

### <3. Hardware configuration example>

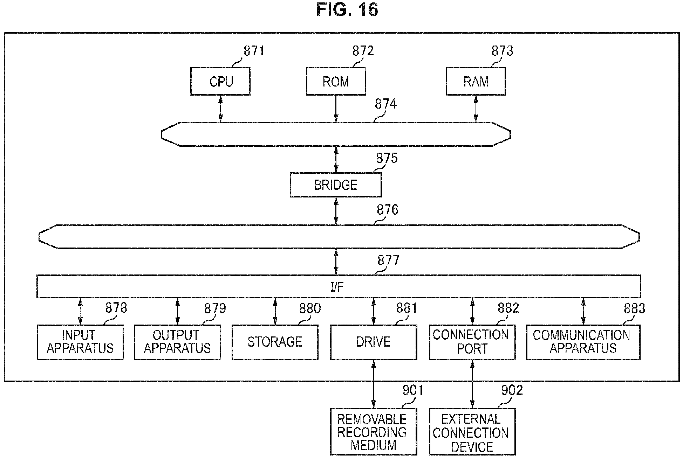

Next, a hardware configuration example common to the environment generating apparatus 10, the control learning apparatus 20, and the information processing apparatus 30 according to the present disclosure will be described. FIG. 16 is a block diagram illustrating a hardware configuration example of each of the environment generating apparatus 10, the control learning apparatus 20, and the information processing apparatus 30 according to the present disclosure. Referring to FIG. 16, each of the environment generating apparatus 10, the control learning apparatus 20, and the information processing apparatus 30 includes, for example, a CPU 871, a ROM 872, a RAM 873, a host bus 874, a bridge 875, an external bus 876, an interface 877, an input apparatus 878, an output apparatus 879, a storage 880, a drive 881, a connection port 882, and a communication apparatus 883. Note that the hardware configuration described here is an example, and some components may be omitted. In addition, a component other than components described here may be further added.

### (CPU 871)

The CPU 871 functions as, for example, an operation processing device or a control device and controls operations of all or some of the components on the basis of various kinds of programs recorded in the ROM 872, the RAM 873, the storage 880, or a removable recording medium 901.

### (ROM 872 and RAM 873)

The ROM 872 is a device that stores programs read by the CPU 871, data used for operations, and the like. For example, a program read by the CPU 871, various kinds of parameters that appropriately change when the program is executed, and the like are temporarily or permanently stored in the RAM 873.

### (Host bus 874, bridge 875, external bus 876, and interface 877)

For example, the CPU 871, the ROM 872, and the RAM 873 are connected to one another the host bus 874 capable of performing high-speed data transmission. On the other hand, for example, the host bus 874 is connected to an external bus 876 having a relatively low data transmission speed via the bridge 875. Further, the external bus 876 is connected to various components via the interface 877.

### (Input apparatus 878)

Examples of the input apparatus 878 include a mouse, a keyboard, a touch panel, a button, a switch, and a lever. Further, a remote controller capable of transmitting a control signal using infrared rays or other radio waves (hereinafter referred to as a remote controller) may be used as the input apparatus 878.

### (Output apparatus 879)

The output apparatus 879 is a device which is capable of notifying the user of acquired information visually or audibly such as, for example, a display device such as a cathode ray tube (CRT), an LCD, or an organic EL, an audio output device such as a speaker or a headphone, a printer, a mobile phone, a facsimile.

### (Storage 880)

The storage 880 is a device that stores various kinds of data. Examples of the storage 880 include a magnetic storage device such as a hard disk drive (HDD), a semiconductor storage device, an optical storage device, and a magneto-optical storage device.

### (Drive 881)

The drive 881 is a device that reads out information recorded in the removable recording medium 901 such as a magnetic disk, an optical disk, a magneto-optical disk, a semiconductor memory, or the like or writes information in the removable recording medium 901.

### (Removable recording medium 901)

Examples of the removable recording medium 901 include a DVD medium, a Blu-ray (a registered trademark) medium, an HD DVD medium, and various kinds of semiconductor storage media. It will be appreciated that the removable recording medium 901 may be, for example, an IC card in which a non-contact type IC chip is mounted, an electronic device, or the like.

### (Connection port 882)

The connection port 882 is a port for connecting an external connection device 902 such as a universal serial bus (USB) port, an IEEE 1394 port, a small computer system interface (SCSI), an RS-232C port, or an optical audio terminal.

### (External connection device 902)

Examples of the external connection device 902 include a printer, a portable music player, a digital camera, a digital video camera, and an IC recorder.

### (Communication apparatus 883)

The communication apparatus 883 is a communication device that establishes a connection with the network, and examples of the communication apparatus 883 include a communication card for wired or wireless LAN, Bluetooth (a registered trademark), or wireless USB (WUSB), an optical communication router, an asymmetric digital subscriber line (ADSL) router, and various kinds of communication modems.

### <4. Conclusion>

As described above, the environment generating apparatus 10 according to the present disclosure can receive information relating to an unlearned environment state and generate an environmental model on the basis of environmental parameters. Further, the control learning apparatus 20 according to the present disclosure can perform control learning on the basis of the received response information and environmental parameters. Still further, the control learning apparatus 20 can request an environmental model in accordance with progress of learning. Further, the information processing apparatus 30 according to the present disclosure can determine whether or not the environment state has been learned on the basis of the acquired information and transmit information relating to an unlearned environment state to the environment generating apparatus 10. According to such a configuration, it is possible to efficiently realize control learning in accordance with an environment in the real world.

The preferred embodiment of the present disclosure has been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, while, in the above-described embodiment, a control target relating to control learning is a vehicle, the present technology is not limited to such an example. The control target according to the present disclosure may be, for example, a robot for manufacturing used in a manufacturing facility or a medical surgical robot used in a medical scene.

The robot for manufacturing is required to handle matters with different weights in a similar manner or handle a matter such as cloth whose shape changes. Further, in the robot for manufacturing, it is assumed that motor characteristics change due to heat or friction. The technology according to the present disclosure addresses the above-described difficulty. Therefore, by applying the technology according to the present disclosure to the robot for manufacturing, it is possible to continue to achieve control which is always suitable for a current environment.

Further, in the medical surgical robot, it is difficult to collect a large amount of data for achieving control during medical practice from the real world. Further, because there exit a number of variations in environments such as constitution and a bleeding state of a patient even in the same surgery, it is difficult to create fulfilling learning data. The technology according to the present disclosure addresses the above-described difficulty. Therefore, by applying the technology according to the present disclosure to the medical surgical robot, it is possible to perform learning which assumes surgeries to more patients.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   a generating unit configured to generate response information relating to a control target in an environmental model generated on a basis of an environmental parameter; and
   a transmitting unit configured to transmit the response information and the environmental parameter to a learning unit which performs machine learning relating to control of the control target.
(2) The information processing apparatus according to (1),
   in which the transmitting unit transmits a reward parameter relating to the machine learning to the learning unit.
(3) The information processing apparatus according to (1) or (2),
   in which the environmental parameter includes at least one of an external parameter which does not depend on a state of the control target and an internal parameter which depends on a state of the control target.
(4) The information processing apparatus according to (3),
   in which the external parameter includes at least one of geographical information, time information, a weather condition, outdoor information, indoor information, information relating to a traffic object and road surface information.
(5) The information processing apparatus according to (3) or (4),
   in which the control target is a vehicle, and
   the internal parameter includes at least one of vehicle body information, loaded object information and passenger information.
(6) An information processing apparatus including:
   a communication unit configured to receive response information relating to a control target in an environmental model generated on a basis of a first environmental parameter, and the first environmental parameter; and
   a learning unit configured to perform machine learning relating to control of the control target using the received response information and the received first environmental parameter.
(7)The information processing apparatus according to (6),
   in which the communication unit transmits a second environmental parameter in accordance with a result of the machine learning to a generating unit which generates the response information.
(8)The information processing apparatus according to (6) or (7),
   in which the communication unit receives a reward parameter relating to the machine learning.
(9) The information processing apparatus according to any of (6) to (8),
   in which the communication unit receives expert information relating to the machine learning.
(10) The information processing apparatus according to (8),
   in which the control target is a vehicle, and
   the reward parameter includes at least one of parameters relating to a distance to a destination, ride quality, a number of times of contact, infringement on a traffic rule, and fuel consumption.
(11) An information processing apparatus including:
   an environment acquiring unit configured to acquire an environmental parameter relating to an environment state;
   a determining unit configured to determine whether or not the environment state has been learned on a basis of the acquired environmental parameter; and
   a transmitting unit configured to transmit the environmental parameter on a basis that the determining unit determines that the environment state has not been learned.
(12) The information processing apparatus according to (11), further including:
   a sensor information acquiring unit configured to acquire sensor information from one or more sensors,
   in which the transmitting unit transmits the sensor information.
(13) The information processing apparatus according to (11) or (12), further including:
   a control information acquiring unit configured to acquire control information relating to control of a control target,
   in which the transmitting unit transmits data relating to the control information.
(14) The information processing apparatus according to (13),
   in which the transmitting unit transmits a reward parameter relating to control learning of the control target.
(15) The information processing apparatus according to any of (11) to (14),
   in which, in a case where the determining unit determines that the environment state has not been learned, the determining unit generates notification data based on the determination, and
   the transmitting unit transmits the notification data.
(16) An information processing apparatus including:
   a receiving unit configured to receive an environmental parameter relating to an unlearned environment state; and
   a generating unit configured to generate data relating to behavior of a first control target in an environmental model generated on a basis of the environmental parameter.
(17) The information processing apparatus according to (16),
   in which the receiving unit receives at least one of sensor information acquired from one or more sensors, a reward parameter relating to control learning of the first control target and control information acquired from a second control target.
(18) The information processing apparatus according to (17),
   in which the second control target includes a vehicle which travels in a real world and a virtual vehicle on a game or a simulator.
(19) An information processing apparatus including:
   an acquiring unit configured to acquire control information acquired from a control target;
   a determining unit configured to determine whether or not a person who controls the control target belongs to a predetermined attribute; and
   a transmitting unit configured to transmit the control information to a learning unit which performs inverse reinforcement learning on a basis of a result of determination by the determining unit.
(20) An information processing apparatus including:
   a receiving unit configured to receive control information acquired from a control target;
   a determining unit configured to determine whether or not a person who controls the control target belongs to a predetermined attribute; and
   a learning unit configured to perform inverse reinforcement learning using control information determined to belong to the predetermined attribute.

### Reference Signs List

- 10: environment generating apparatus
- 110: generating unit
- 120: environment capturing unit
- 130: communication unit
- 20: control learning apparatus
- 210: learning unit
- 220: apparatus communication unit
- 30: information processing apparatus
- 310: acquiring unit
- 320: control unit
- 330: determining unit
- 340: server communication unit
- 40: vehicle
- 50: three-dimensional map DB
- 60: network

## Claims

1. An information processing apparatus comprising:
a generating unit configured to generate response information relating to a control target in an environmental model generated on a basis of an environmental parameter; and
a transmitting unit configured to transmit the response information and the environmental parameter to a learning unit which performs machine learning relating to control of the control target.

2. The information processing apparatus according to claim 1,
wherein the transmitting unit transmits a reward parameter relating to the machine learning to the learning unit.

3. The information processing apparatus according to claim 1,
wherein the environmental parameter includes at least one of an external parameter which does not depend on a state of the control target and an internal parameter which depends on a state of the control target.

4. The information processing apparatus according to claim 3,
wherein the external parameter includes at least one of geographical information, time information, a weather condition, outdoor information, indoor information, information relating to a traffic object and road surface information.

5. The information processing apparatus according to claim 3,
wherein the control target is a vehicle, and
the internal parameter includes at least one of vehicle body information, loaded object information and passenger information.

6. An information processing apparatus comprising:
a communication unit configured to receive response information relating to a control target in an environmental model generated on a basis of a first environmental parameter, and the first environmental parameter; and
a learning unit configured to perform machine learning relating to control of the control target using the received response information and the received first environmental parameter.

7. The information processing apparatus according to claim 6,
wherein the communication unit transmits a second environmental parameter in accordance with a result of the machine learning to a generating unit which generates the response information.

8. The information processing apparatus according to claim 6,
wherein the communication unit receives a reward parameter relating to the machine learning.

9. The information processing apparatus according to claim 6,
wherein the communication unit receives expert information relating to the machine learning.

10. The information processing apparatus according to claim 8,
wherein the control target is a vehicle, and
the reward parameter includes at least one of parameters relating to a distance to a destination, ride quality, a number of times of contact, infringement on a traffic rule, and fuel consumption.

11. An information processing apparatus comprising:
an environment acquiring unit configured to acquire an environmental parameter relating to an environment state;
a determining unit configured to determine whether or not the environment state has been learned on a basis of the acquired environmental parameter; and
a transmitting unit configured to transmit the environmental parameter on a basis that the determining unit determines that the environment state has not been learned.

12. The information processing apparatus according to claim 11, further comprising:
a sensor information acquiring unit configured to acquire sensor information from one or more sensors,
wherein the transmitting unit transmits the sensor information.

13. The information processing apparatus according to claim 11, further comprising:
a control information acquiring unit configured to acquire control information relating to control of a control target,
wherein the transmitting unit transmits data relating to the control information.

14. The information processing apparatus according to claim 13,
wherein the transmitting unit transmits a reward parameter relating to control learning of the control target.

15. The information processing apparatus according to claim 11,
wherein, in a case where the determining unit determines that the environment state has not been learned, the determining unit generates notification data based on the determination, and
the transmitting unit transmits the notification data.

16. An information processing apparatus comprising:
a receiving unit configured to receive an environmental parameter relating to an unlearned environment state; and
a generating unit configured to generate data relating to behavior of a first control target in an environmental model generated on a basis of the environmental parameter.

17. The information processing apparatus according to claim 16,
wherein the receiving unit receives at least one of sensor information acquired from one or more sensors, a reward parameter relating to control learning of the first control target and control information acquired from a second control target.

18. The information processing apparatus according to claim 17,
wherein the second control target includes a vehicle which travels in a real world and a virtual vehicle on a game or a simulator.

19. An information processing apparatus comprising:
an acquiring unit configured to acquire control information acquired from a control target;
a determining unit configured to determine whether or not a person who controls the control target belongs to a predetermined attribute; and
a transmitting unit configured to transmit the control information to a learning unit which performs inverse reinforcement learning on a basis of a result of determination by the determining unit.

20. An information processing apparatus comprising:
a receiving unit configured to receive control information acquired from a control target;
a determining unit configured to determine whether or not a person who controls the control target belongs to a predetermined attribute; and
a learning unit configured to perform inverse reinforcement learning using control information relating to the person who controls the control target and who is determined to belong to the predetermined attribute.
